Europäisches Patentamt

European Patent Office

Office européen des brevets

(11) Publication number: **0 189 932 B1**

# EUROPEAN PATENT SPECIFICATION

(45) Date of publication of patent specification: **02.09.92**

(51) Int. Cl.⁵: **G11B 7/09, G11B 7/095**

(21) Application number: **86101279.7**

(22) Date of filing: **31.01.86**

(54) **Track servo system for controllably projecting an optical beam to an optical disk.**

(30) Priority: **31.01.85 JP 18024/85**
**30.05.85 JP 118532/85**
**03.08.85 JP 171615/85**
**03.08.85 JP 171616/85**

(43) Date of publication of application:
**06.08.86 Bulletin 86/32**

(45) Publication of the grant of the patent:
**02.09.92 Bulletin 92/36**

(84) Designated Contracting States:
**DE FR GB IT NL**

(56) References cited:
**FR-A- 2 352 367**
**US-A- 4 507 763**

**PATENT ABSTRACTS OF JAPAN, vol. 6, no. 51 (P-108)[929], 6th April 1982; & JP - A - 56 165 937 (MATSUSHITA) 19-12-1981**

**PATENT ABSTRACTS OF JAPAN, vol. 7, no. 26 (P-172)[1171], 2nd February 1983; & JP - A - 57 179 954 (SONY) 05-11-1982**

**PATENT ABSTRACTS OF JAPAN, vol. 10, no. 22 (P-424)[2079], 28th January 1986; & JP - A - 60 175 224 (ASAHI) 09-09-1985**

(73) Proprietor: **FUJITSU LIMITED**
**1015, Kamikodanaka Nakahara-ku**
**Kawasaki-shi Kanagawa 211(JP)**

(72) Inventor: **Arai, Shigeru**
**7-6, Yamanone 1-chome**
**Zushi-shi Kanagawa, 249(JP)**
Inventor: **Iwamoto, Toshitaka**
**13-8-B201, Sugeshiroshita Tama-ku**
**Kawasaki-shi Kanagawa, 214(JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**W-8000 München 22(DE)**

**Description**

BACKGROUND OF THE INVENTION

The present invention relates to an optical storage apparatus storing information on the surface of an optical disk in the form of a great number of pits aligned on a track. It further relates to a servo system for tracking an optical beam, such as a laser beam, onto the surface of an optical disk to read out information stored thereon or to write information therein.

In an optical storage device, information is stored usually in the form of binary signals, namely, a great number of pits aligned on circular tracks on an optical disk. Optical readout of these signals is accomplished by scanning the disk with a laser beam of the order of 1 μm in diameter. The stored information is detected by sensing the laser beam which is reflected at the surface of the disk and modulated by optical diffraction due to the presence of pits formed thereon.

The feature of the optical storage medium lies in its extraordinary high signal density much higher than that of a magnetic storage medium. This derives from fine and precise structure of the optical medium, namely, the optical disk. The pitch of the tracks is substantially small typically 1.6μm and the sizes of the pits aligned on the track is also of 0.1 μm order. In order to read out the information clearly, the laser beam must be exactly focused and centered onto the tracks. Consequently, a substantially accurate servo system is required for centering and focusing the laser beam onto the tracks.

In the optical system, the eccentricity of the tracks, mainly due to the insufficient dimensional preciseness of the disk, comes up to an order of 100 μm. This provides a rotating disk with periodical and wide range transportation of the tracks in the radial direction, causing substantial difficulty for tracking. In addition, an objective lens with a high numerical aperture such as 0.5 is used in order to perceive extremely fine details. This leads to a very small depth of focus such as several μm. The disk surface may differ from its true surface in the vertical direction to the disk surface by an order of 100 μm owing to some distortion of the disk. This leads to a difficulty for focusing.

In spite of above adverse conditions, the laser beam must be kept on the track with an accuracy of approximately 0.1 μm order to avoid cross-talking and also must be focused onto the surface with an accuracy of approximately 0.1 μm, for instance. Thus an accurate servo system for centering the laser beam on the track becomes a key point of the optical storage apparatus.

There have been developed various servo systems for focusing and tracking of an optical beam, as reported in references such as "Optical Redout of Videodisc", in IEEE Transaction C.E., Nov. 1976, on page 304, by C.Bricot et al.

With tracking servo system, there is another problem due to "beam shift" which is essentially inherent to the optical system employed. This is also accelerated by a mechanical hazard referred to as "skew" of the disk surface. This is caused mainly by slight radial distortion, usually convexed, of disks. Originally, the optical servo system is designed such that the incident laser beam strikes the disk surface perpendicularly. Accordingly, the laser beam is reflected back and proceeds exactly following the same incident path. The laser beam must strike the surface of the disk perpendicularly. Otherwise, the return path of the reflected laser beam will be off the incident path. Consequently, beam shift is derived, affecting adversely the tracking optical system.

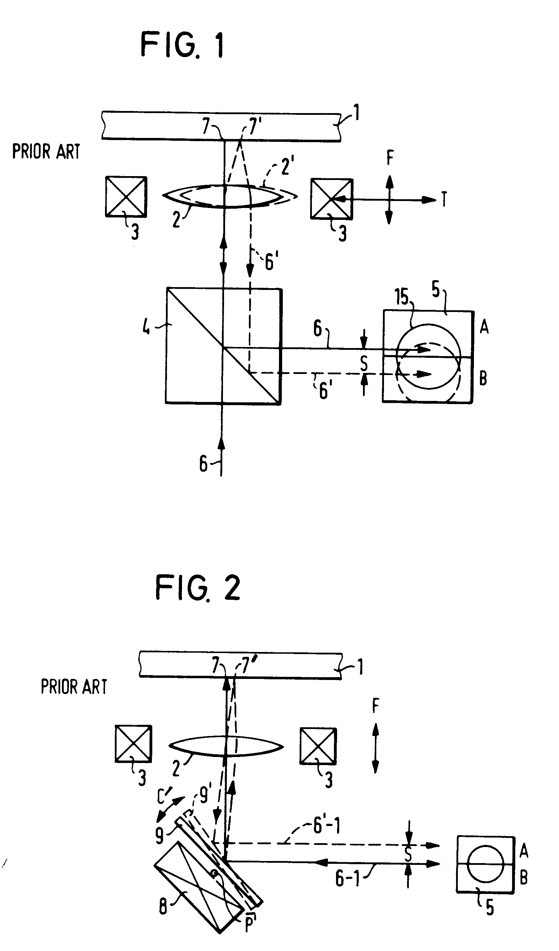

Now prior art servo systems are described in more detail referring to drawings, Fig.1 to Fig.3, to study how the beam shift occurs.

Fig.1 is a schematic optical block diagram of one example of conventional system for obtaining track error signals, illustrating only an actuator 3 for driving an objective lens 2 and the relevant elements. Actuator 3 contains electrodynamic coils, similar to the ones utilized in a loudspeaker, to drive lens 2 in tracking direction T according to track error signals, and in focus direction F according to focus error signals. The actuator of this type is referred to as a two-dimensional actuator.

A laser beam 6 is directed to a disk 1 perpendicularly thereto, passing through a beam splitter 4 and being focused by lens 2 to form a focal point 7 on disk 1. Then, the laser beam is reflected, as shown by a solid line, on the pregrooves (not shown) formed on disk 1, proceeds following the precedent optical path. Subsequently, a part of the laser beam is deflected by beam splitter 4 at a right angle, and falls on a photosensor 5 comprising two sub-photosensors A and B. Hereby, incident beam is masked by the aperture of objective lens 2, forming a spot 15 at a fixed position of photosensor 5. When laser beam 6 is not well centered on the track, an asymmetry of the laser beam intensity distribution over spot 15 occurs owing to optical diffraction caused by the pregrooves. The asymmetry of beam intensity is sensed by photosensor 5 and converted into track error signals through an differential amplifier (not shown) connected to sub-photosensors A and B. This method is referred to as a "push-pull method".

EP 0 189 932 B1

Now the mechanism of the occurrence of beam shift is described. When lens 2 is moved to a new position, as shown in Fig.1 by dotted lines with a reference numeral 2', by actuator 3 driven according to a track error signal, focal point 7 is moved to a new position referred by numeral 7'. Thus, incident path of the laser beam becomes non-perpendicular to the surface of disk 1. Consequently, the new return path of the laser beam follows a path 6'-1, being shifted by s from the original incident path 6-1. This is the beam shift. As the result, the optical axis of the laser beam incident on photosensor 5 is shifted by s. Thus, the optical intensity distribution over spot 15 is changed, generating an off-set (a fixed deviation of the value of the signal current) of the track error signals. Therefore, an exact track servo operation becomes impossible.

Another example of the beam shift is described referring to Fig.2. The track servo system of Fig.2 has two actuators: a focus servo actuator 3 and a track servo actuator 8. An objective lens 2 is driven only in F direction by focus servo actuator 3 for focusing the laser beam 6-1 on disk 1. The tracking of the laser beam is accomplished by the reflection on a pivotted tilting mirror 9. Track servo actuator 8 driven by a track error signal rotates mirror 9 controllably around a pivot axis $\overline{P}'$ in the direction shown by arrow-headed arc C'. When the center of a track lies on the optical axis of lens 2, the laser beam from a laser source (not shown) will fall perpendicularly on disk 1. The reflected laser beam will return the same incident path 6-1 as shown by solid lines. However, when the track moves to a new position 7' because of the eccentricity of disk 1 and consequently mirror 9 is rotated to a new position 9', the optical path 6'-1 becomes as shown in dotted lines. This is because the laser beam incident on disk 1 is no more perpendicular to the surface of disk 1. Thus a beam shift s is resulted causing an erroneous track error signal.

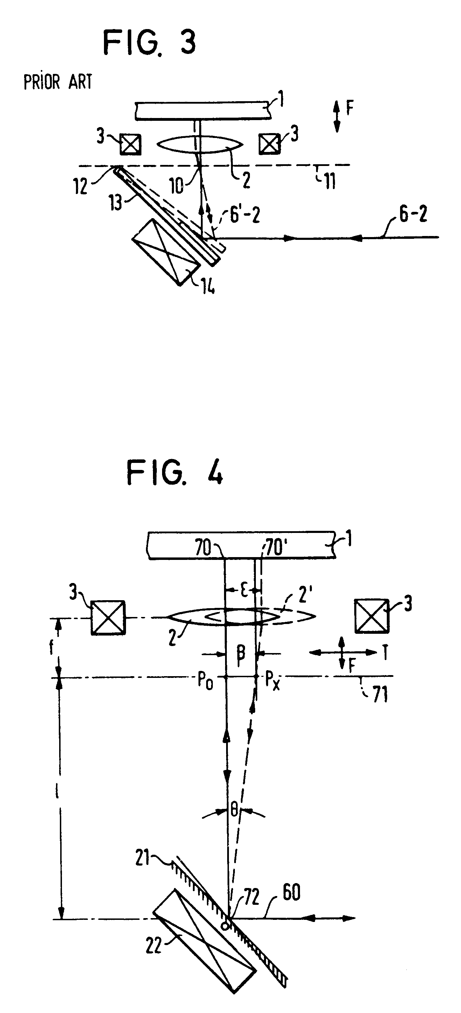

In order to remove the beam shift, an improved structure of the tilting mirror is proposed in conference bulletin of Japanese Applied Physics Society, 7P-X-8, April 1983, by Maeda et al. As shown in an optical block diagram of Fig.3, the pivot axis 12 of a tilting mirror 13 driven by a mirror actuator 14 is located on the back focal plane 11 of the employed objective lens 2. Hereby, back focal point is defined as a focal point of lens 2 located on the opposite side to disk 1 with respect to lens 2.

The original laser beam 6-2 is directed exactly in parallel with disk surface, namely, with the back focal plane of lens 2. As the result, it is proved that laser beam 6-2 incident onto lens 2 is deflected by tilting mirror 13, and passes immediately neighbor of back focal point 10 of lens 2, causing a beam shift negligibly small in practice.

On the other hand, lens 2 moves forward and backward for focusing by focus actuator 3. However, the vertical movement of lens 2 results in a small discrepancy between pivot axis 12 and the back focal plane of lens 2. The additional beam shift due to the above discrepancy is also proved to be small negligible in practice.

Thus, the improved structure of the tilting mirror seems to succeed to solve the beam shift problem of a track servo system. However, the size of the new tilting mirror, including its associated actuator, becomes, in its nature, rather large, affecting adversely the responding ability to track error signal of high frequency and packing density of the servo apparatus.

In addition to the aforesaid problems inherent to the optical track servo system, the skew of the relevant optical disk is also an inherent problem difficult to overcome. As such, these problems due to "beam shift" has been expected to be solved.

SUMMARY OF THE INVENTION

It is an object of the present invention to provide a track servo system for an optical storage apparatus, being capable of creating a precise track error signal.

It is another object of the present invention to provide a track servo system for an optical storage apparatus, being almost free from "beam shift" problem to obtain a substantially correct track error signal.

It is further object of the present invention to provide a reliable servo system for an optical storage apparatus.

These objects can be attained by an optical track servo system according to the present invention, the principle of which is now described referring to an optical block diagram of Fig.4. The system has two actuators. The one is a lens actuator 3 for driving an objective lens 2 perpendicularly to disk 1, in F direction, for focusing and simultaneously in parallel with the surface of lens 2, i.e. radially in T direction, for tracking. The other is a mirror actuator 22 for driving a tilting mirror 21 (hereinafter simply a mirror) for deflecting the laser beam 60 for tracking. The feature of the present invention is that the tracking of the laser beam is accomplished by a cooperative operation of lens actuator 3 and mirror actuator 22. By the co-operation, the reflected laser beam 60 is always guided to pass through the back focal point of lens 2.

As the result, laser beam 60 proceeds in parallel with the optical axis of lens 2, striking disk 1 perpendicularly (70,70'). Accordingly, the return path of the laser beam reflected at the surface of disk 1

3

coincide with the incident path of laser beam 60, resulting in no beam shift. The cooperative operation of both actuators is realized by a circuit for controlling drive coil currents of both actuators such that relation between rotating angle $\theta$ of mirror 21 and displacement $\epsilon$ (transfer distance in T direction of lens 2) is always maintained to satisfy the following equation:

$$\epsilon = (\ell + f) \tan \theta \qquad (1)$$

or

$$\theta = \text{arc tan} (\epsilon /(\ell + f)) \qquad (1)'$$

where,

$\ell$ : the distance between the center 72 of the rotation of mirror 21 and back focal point $P_0$ of lens 2, and

f : the distance between the center of lens 2 and the back focal point, namely, focal length of lens 2.

The necessary displacement of lens 2, namely distance $\beta$ between $P_0$ and $P_x$, both in the focal plane 71, is given by

$$\beta = \ell \tan \theta \qquad (2)$$

So far, it has been assumed that the surface of the relevant disk is always perpendicular to the optical axis of the objective lens. Hereinafter, this disk surface is referred to as a true plane of the disk. Now, a beam shift derived from "skew", namely, deviation or inclination of the actual surface of a disk from its true plane, is discussed. Hereby, it is still assumed that the inclination occurs only in a radial direction of the disk. Actually, this is the case in the field, since a slight concentric (radial) deformation of a disk due to its elasticity is apt to occur for a thin optical disk.

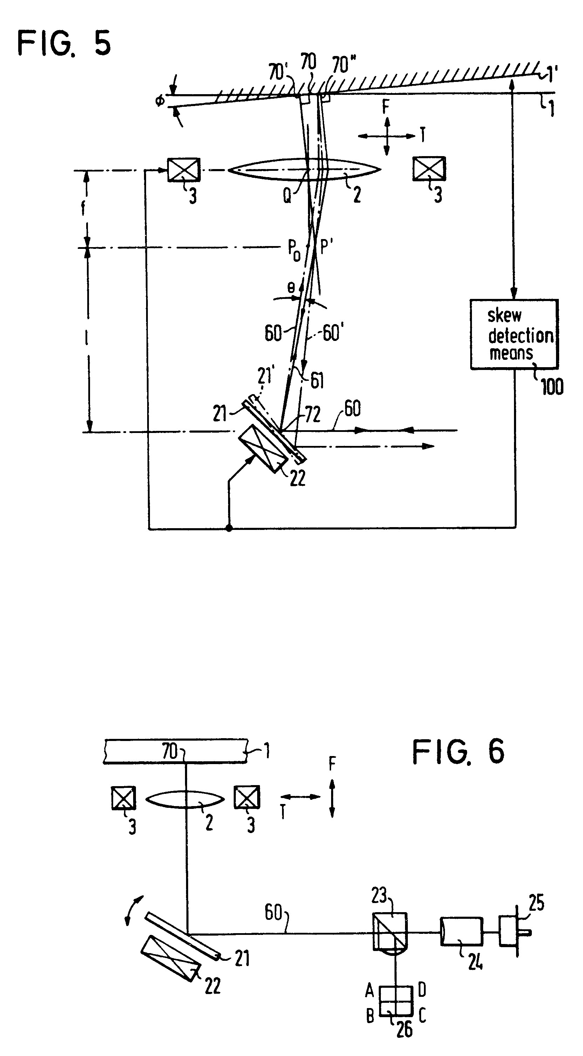

Fig.5 is an optical block diagram for explaining the principle for eliminating the aforesaid effect on the beam shift caused by the skew. Like reference numerals in Fig.4 and Fig.5 denote like parts. Lens actuator 3 and mirror actuator 21 co-operate such that optical path 60 of the laser beam passes the back focal point $P_0$ of lens 2, as described in the first and second embodiments. In order to eliminate the adverse effect on beam shift caused by the skew, an skew detecting means 100 is added.

When disk 1 is perpendicular to the optical axis of lens 2, in other words, disk 1 is within the true plane, a laser beam proceeding along optical path 60 passes through the back focal point $P_0$ of lens 2. Accordingly, the reflected laser beam proceeds back following the same path 60. However, when disk 1 is inclined as represented by a partially hatched cross-section 1' by an angle $\phi$, the laser beam following path 60, (passing back focal point $P_0$) strikes disk 1' with an angle $\phi$ to the normal line of the surface. Consequently, the reflected laser beam can not follow the incident path 60, but follows different path 60', resulting in a beam shift. Hereby, as shown in Fig.5, a point where a normal line to the disk surface, passing through the center Q of lens 2, intersects the back focal plane of lens 2, is defined as a virtual back focal point P' of lens 2. In its nature, any light incident on lens 2, passing the virtual focal point P', proceeds in parallel with a line connecting points P',Q and 70', a normal line, and strikes disk 1' perpendicularly (70'') thereto. Therefore, a laser beam controlled to pass the virtual back focal point P', not back focal point $P_0$, will fall on disk 1 perpendicularly and result in no beam shift. In order to cancel the skew effect, therefore, mirror 21 must be adjusted to a new position represented by a dotted figure 21', deflecting the beam reflected on mirror 21' by a small angle $\Delta\theta$, whereby

$$\Delta\theta = \gamma / \ell$$

where

$$\gamma = P_0 - P' = f \tan \phi \fallingdotseq f \phi \qquad \ldots\ldots\ldots\ldots\ldots(3)$$

Further, the present invention has another advantage which is derived in principle. Generally, there is a limit $\theta_0$ of rotating angle $\theta$ of mirror 21, namely an incident angle to lens 2, over which a lens aberration occurs and satisfactory beam focusing becomes impossible. The maximum followable off-tracking distance $\epsilon_{max}$ which can be followed by the laser beam without lens aberration is improved by the present invention;

that is, apparently by referring to Fig.3 and Fig.4,

$\epsilon_{max}$ = f tan $\theta_0$ for prior art one (Fig.3),

while

$\epsilon_{max}$ = ($\ell$ + f) tan $\theta_0$ for the present invention, (Fig.4)

If dimensions f = 4.3 mm, $\ell$ = 20 mm are taken, for example, the followable off-tracking distance can be extended by ($\ell$ + f)/f = 5.6 times for a given $\theta_0$ of the lens.

It is the principle of the following embodiments of the present invention that, according to the detected skew of disk 1 through the skew detecting means 100, movements of mirror 21 and lens 2 are adjusted co-operatively such that the laser beam passes the virtual focal point P'. Thus obtained skew signal is used for compensating the adverse effect of "skew" of the disk. There are disclosed a lot of improved modifications which will be apparent in the following description of relevant embodiments of the present invention.

In conclusion, in a servo system for tracking a laser beam onto a track of an optical disk according to the present invention, a tilting mirror and a lens are driven by respective actuators such that the laser beam always pass through the back focal point or the virtual back focal point of the lens, resulting in elimination of beam shift. As the result, reproducibility of information stored in the disk surface is substantially improved.

These together with other objects, features, and advantages will be subsequently apparent as more fully hereinafter describe and claimed, with reference to the accompanying drawings, wherein like numerals refer to like parts.

BRIEF DESCRIPTION OF THE DRAWINGS

Fig.1 is a schematic optical block diagram of a prior art servo system of an optical apparatus;

Fig.2 is a schematic optical block diagram of another prior art servo system of an optical apparatus;

Fig.3 is a schematic optical block diagram of still another prior art servo system of an optical apparatus, improved so as to reduce beam shift effect;

Fig.4 is a schematic optical diagram of an improved servo system of an optical apparatus by the present invention, for discussing the principle of a method for the elimination of beam shift caused by its optical system;

Fig.5 is a schematic optical diagram of an improved servo system of an optical apparatus by the present invention, for discussing the principle of a method for the elimination of beam shift due to skew of the employed optical disk;

Fig.6 is a schematic optical block diagram of the first embodiment, a servo system of an optical apparatus by the present invention, illustrating its optical constitution;

Fig.7 is a block diagram of the first embodiment of the present invention shown in the precedent figure, illustrating its signal processing system;

Fig.8 is a schematic optical block diagram of the second embodiment, a servo system of an optical apparatus by the present invention, illustrating its optical constitution;

Fig.9 is a control block diagram of the first and second embodiments of the present invention, illustrating its feedback servo loop;

Fig.10 is a block diagram illustrating a servo loop of the first and the second embodiments;

Fig.11 is a schematic optical block diagram of the third embodiment further having a skew detecting means, illustrating its optical constitution;

Fig.12 is a block diagram of the third embodiment of the present invention shown in the precedent figure, illustrating its signal processing system;

Fig.13 is a time chart, illustrating a waveform of track error signals being subject to offset of signals caused by skew;

Fig.14 is a block diagram of a circuit for detecting an offset value of track signal, used for the fourth and the fifth embodiments; and

Fig.15 is a schematic optical block diagram of the fourth embodiment of the present invention, having a skew detecting means of another type, illustrating its signal processing system.

DETAILED DESCRIPTION OF THE PREFERRED EMBODIMENTS

There are various types of servo system for an optical storage apparatus as described above. For simplicity, through all the embodiments of the present invention, it is assumed that the disk has pregrooves for guiding the incident laser beam onto a track and, naturally, a "push-pull" method is adopted for generating track error signal.

Fig.6 is an optical block diagram of an optical storage apparatus of the first embodiment of the present invention. A laser flux emitted from a laser source 25 is collimated by a collimating lens 24 and formed into a laser beam 60 having a circular section. Laser beam 60 is incident on the surface of an optical disk 1, passing through a polarizing beam splitter 23, being deflected by a tilting mirror 21, being condensed by an objective lens 2, and forming a focal point 70 on disk 1. The incident laser beam is reflected at the surface of disk 1, follows the precedent path in a reversed direction, and a part of the reflected laser beam is deflected by splitter 23 and falls on a photosensor 26 comprising four sub-photosensors A, B, C, and D. In the following, the output signals of each sub-photosensor are denoted by A, B, C, and D respectively. Lens 2 is driven in a radial (T) direction perpendicular to its optical axis by an actuator 3 involving electromagnetic coils. Lens 2 is also movable in the axial (F) direction of the lens for focusing.

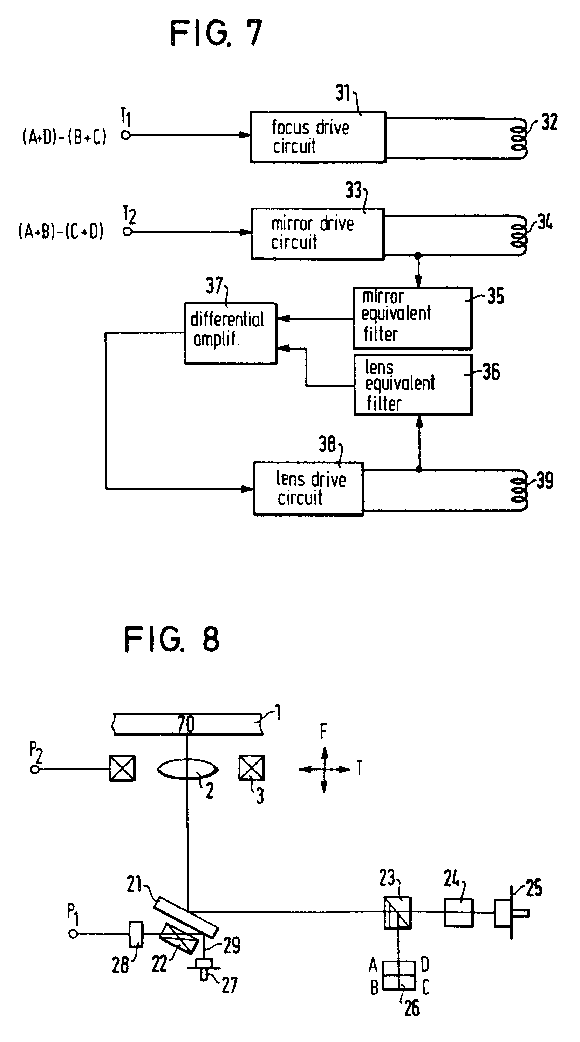

Photoelectric currents sensed by sub-photosensors are processed in a conventional manner to output track and focus error signals. These error signals are used for driving a lens transfer coil 39 involved in a lens actuator 3 and a mirror coil 34 involved in a mirror actuator 22. Then, by a circuit shown in a block diagram of Fig.7, focus error signal $(A+D)-(B+C)$ is inputted through a terminal $T_1$ to a focus drive circuit 31 to drive a focus coil 32 involved in lens actuator 3.

On the other hand, a track error signal $(A+B)-(C+D)$ inputted through another terminal $T_2$, drives mirror coil 34 through a mirror drive circuit 33, and rotates mirror 21 by an angle $\theta$ from the neutral position. Simultaneously, a signal corresponding to the current of mirror coil 34 is applied to a equivalent filter 35 and converted into a mirror position signal corresponding to angle $\theta$. From the mirror position signal, a target lens position signal satisfying the relation given by equation (2) is inputted to a differential amplifier 37, to which another position signal, actual lens position signal, outputted from another equivalent filter 36 is inputted. The actual lens position signal is created through equivalent filter 36 by inputting therein a signal corresponding to the present current of lens coil 39. Thus, an output signal corresponding to the difference between the actual lens position and the target lens position signal is outputted from the differential amplifier 37. The displacement $\beta$ of lens 2 given by equation (2) is thus accomplished by applying the output signal to lens coil 39. In such a manner, a servo loop is realized to keep the optical path of the laser beam, deflected by mirror 21, always pass the back focal point of lens 2.

It is apparent for those skilled in the art that the servo loop described above can be also accomplished in another way; lens 2 is transferred first in T direction by the track error signal, and corresponding to the coil current of lens coil 39, a current is supplied to mirror coil 34 to drive mirror 21 by an angle $\theta$ such that the relation between the mirror angle $\theta$ and the off-track distance $\epsilon$ (distance between focal point 70 and 70') satisfies equation (1) or (1').

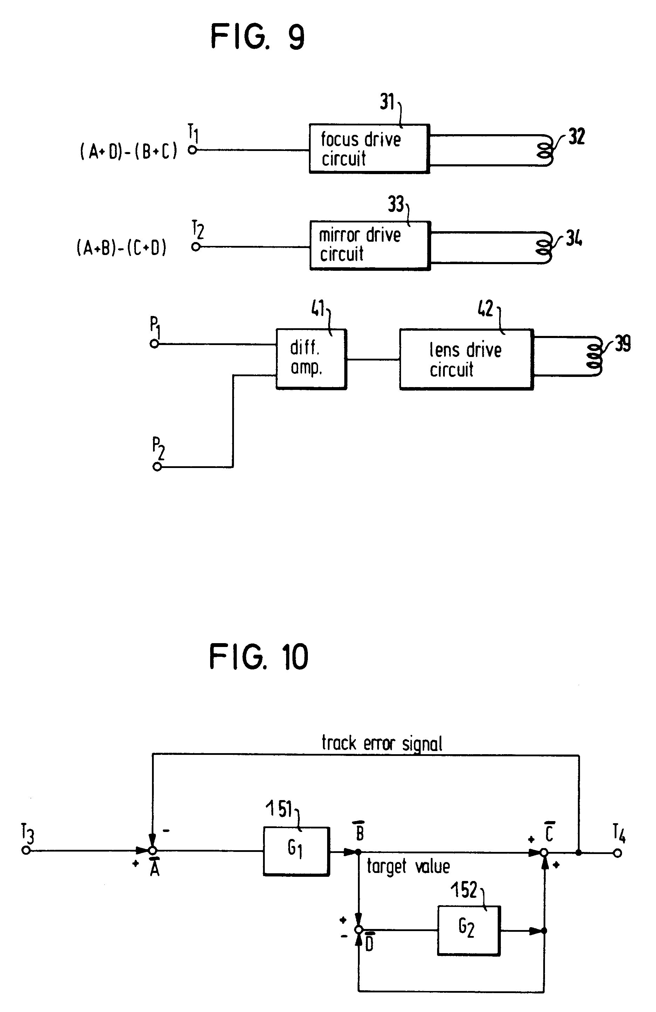

The optical system of the first embodiment contains only one laser source, simplifying the total system and leading to fairly low cost of the device. However, the characteristics of the equivalent filter are not always output the signals correctly representing the relation between relevant factors such as $\theta$ and $\epsilon$. In order to remove this infidelity of the servo loop, the equivalent filters are removed and another optical source is added instead thereof, in the second embodiment. Fig.8 is an optical diagram illustrating the tracking system of the second embodiment, and Fig.9 is its circuit block diagram. Optical elements of the servo system illustrated in Fig.8 is the same as those of Fig.6 except additional optical system comprising another optical source 27 and its photosensor 28, for detecting the angle position of mirror 21 directly; in the relevant signal processing circuit, as shown in a block diagram of Fig. 9, no equivalent filter is used.

Mirror 21 is rotated by an angle according to track error signal, $(A+B-(C+D))$, through a mirror drive circuit 33 and a mirror coil 34. Then, unlike the servo system of Fig. 7, the actual angle position of mirror 21 is detected directly using an optical beam 29 emitted from a LED (light-emitting diode) 27 and another photosensor 28. The emitted beam 29 is reflected by the back surface of the mirror 21 on the photosensor 28. The photosensor 28 may be of the same construction as photosensor 26 in Fig. 6. It may comprise four sub-photosensors. The photocurrents of the sub-photosensors are compared and converted to a target lens position signal $P_1$ according to equation (2). While an actual lens position signal $P_2$ is created directly associating with the lens coil current. Both signals $P_1$ and $P_2$ are inputted into a differential amplifier 41, and the differential output is applied to lens coil 39 through lens drive coil 42. Thus, the output signal of the differential amplifier 37 provides the servo loop with a feedback signal for lens coil 39 to move lens 2 such that equation (2) is satisfied. As such, the second embodiment will provide the servo system with a more accurate and sensitive servo loop for tracking, even though it contains more optical elements than the first embodiment, leading to a higher cost.

Fig. 10 is a control block diagram of the first and second embodiments. Reference numerals 151 denotes mirror transfer function $G_1$, and 152 denotes a lens transfer function $G_2$. At nodepoint $\overline{A}$, a target value (corresponds to the center of a target track) from terminal $T_3$ and a track error signal are compared with each other, and the difference thereof is used to drive a mirror. Simultaneously, a target mirror position signal obtained at node-point $\overline{B}$ and a lens position signal at node-point $\overline{D}$ are compared and the lens is transferred corresponding to the difference between both signals. At node-point $\overline{C}$, the laser beam displacement due to the mirror rotation and that due to lens transfer are added, and outputted to terminal $T_4$ as a track error signal. Thus a feed back signal is applied to point $\overline{A}$.

One of features of the present invention is its miniaturization of the servo system in comparison with the prior art one shown in Fig.3. Both servo means are free from beam shift of the laser beam. However, as described before, the latter adopts a large mirror, resulting in a rather large size of the servo system and a low responding capability. The characteristics of mirror units including mirrors and mirror actuators of both types are tabulated in the following table:

| item | Prior Art | Invention |
|------|-----------|-----------|
| mirror size (mm) | 30X30X30 | 25X10X15 |
| weight (gr) | 30 | 15 |
| Accelerating capability (Bl/m) | 150 | 1000 |
| Response capability (KHZ) | 2 | 5 |

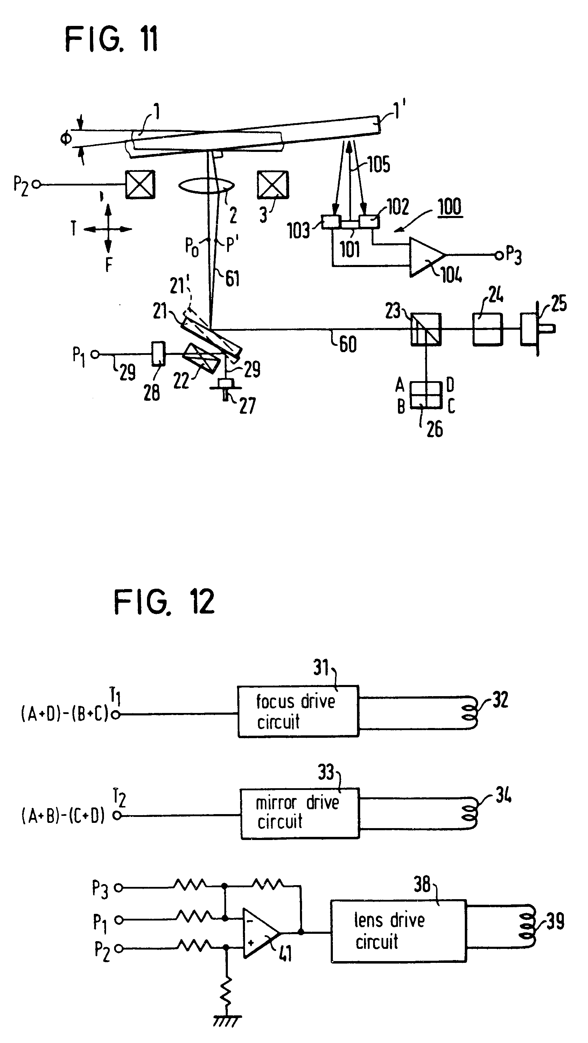

Now, further improved track servo system, having a compensation means for effect caused by a skew of the disk, is described. Fig.11 is an optical block diagram of the third embodiment and Fig.12 illustrates its electrical block diagram. The third embodiment comprises the second embodiment and a further added skew detecting means 100 having an LED source 101, a pair of photosensor 102 and photosensor 103, and a differential amplifier $\overline{104}$. The description of operation and function common to those of the second embodiment is omitted for short. When there is no skew, the photocurrents generated by both sub-photosensors 102 and 103 are balanced and the output signal $P_3$ of the differential amplifier 104 becomes zero. When a skew of disk 1 appears, the photocurrents of both sub-photosensors 102 and 103 become unbalanced, outputting a differential signal. Thus the skew angle $\phi$ of disk 1 is detected as a skew signal $P_3$, being usually approximately proportional to inclination angle $\phi$. Skew signal $P_3$ is applied to differential amplifier 41 in combination with target lens position signal $P_1$ in order to compensate the shift of lens 2 by a length of $\gamma$ given by equation (3). The sum of both the signals are compared with actual lens position signal $P_2$ by differential amplifier 104. Finally, the output current of differential amplifier 104 is fed to a lens drive circuit 38, activating lens coil 39 to drive lens 2. Thus, the laser beam emitted from laser source 25, and reflected by mirror 21 is guided to always pass virtual back focal point P' of lens 2 to remove the beam shift due to skew.

The removal of the beam shift can be accomplished in another way; track error signal (A + B)-(C + D) is fed to lens drive circuit 38 first, and detected skew signal $P_3$ is fed to mirror drive circuit 33 combined with a target mirror position signal (the relevant circuit diagram is not shown). Hereby, attained result is almost the same.

Before description of the third embodiment, a random accessing operation is described briefly. Usually, in an optical storage apparatus, an optical head comprises a carriage mounting laser sources, photosensors and servo means thereon. In general, random track accessing is classified into a coarse accessing and a fine accessing. The former is the one of a long range radial transfer whereby the optical head is transferred by the carriage, and the latter is the one of a short range wherein the accessing is accomplished by jumping of the laser beam, namely the deflection of the laser beam driven by servo means.

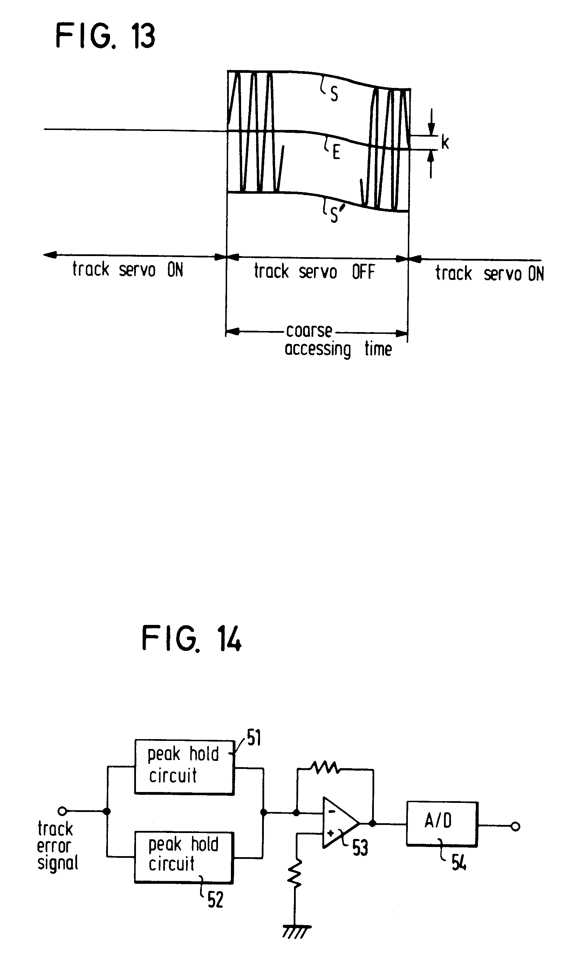

Now, the fourth embodiment is disclosed. It has an improved skew detecting means without a special optical beam therefor, and an offset current of a track signal generated by a skew of the disk is utilized. The principle is described referring to a time chart of the track signal shown in Fig.13.

Practically, off-tracking of a laser beam on a rotating optical disk occurs owing to the eccentricity of the tracks, resulting in an alternative deviation (off-tracking) of the laser beam from the track center. Consequently, as shown in Fig.13, an actual waveform of a track signal obtained from the photosensor has an alternative wave shape having a frequency corresponding to the rotating speed of the disk. If the disk has a skew, beam shift of the laser beam incident on the photosensor occurs, leading to a shift of optical intensity distribution in a spot on the photosensor. Thus, an offset of the wave form of the track signal appears. Since this offset is considered to be proportional to the beam shift, the skew of the disk can be detected utilizing its offset. However, when the track servo loop is activated, the offset of the track signal is mixed with other position signals and cannot be separated. The servo loop, therefore, must be cut off when the track signal offset is utilized as a skew signal. In practice, the skew signal is taken out by cutting off the servo loop during a coarse access time of the servo head which carries the whole servo system moving radially over the disk from one point to another for track accessing.

The offset is given by the center value E (average value) between a positive peak value S and the following negative peak value S'. Fig.14 is a block diagram for detecting the offset value of the track signal. Both the peak values S and S' of the track signal are held by peak-hold circuit 51 and 52, added by a comparator 53, and converted into digital value by an analog/digital (A/D) converter 54. Thus, a digital skew signal is obtained. The value of the skew signal immediately before the end of the coarse track accessing is stored by a storage means and the stored value of the signal is used as a skew signal for the following track servo operation.

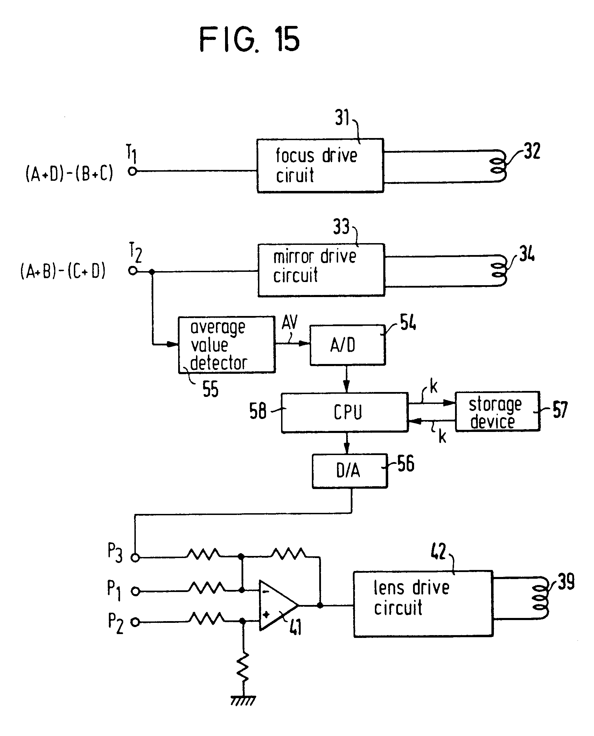

Fig.15 is a block diagram of a servo system having the aforesaid skew detecting means and basically the same system as that of Fig. 12. A digital skew signal is outputted from an average value detecting circuit 55 such as the one shown in Fig. 14. Practically, the skew signal, namely the offset k of track signals as shown in Fig. 13, is memorized only at the end of the coarse accessing and used thereafter. The signal $P_3$, is fed to a differential amplifier 41 in combination with track error signal $P_1$. The subsequent processing is the same as that of Fig. 12.

Now the fifth embodiment is described. The apparatus shown in Fig. 15 is also used herein. During initial seeking time of the optical head, the skew distribution along a radius of a disk to be read is detected in advance by the aforesaid method using a skew detecting means, and the detected result is processed in a CPU 58 and stored in a storage means 57 as a function of the track location (track numbers). Thereafter, at each read/write operation of the device, a skew signal corresponding to each servo track number is recalled by the CPU 58 from the stored information and converted by a D/A converter 56 into an analog signal which is used for compensating the adverse effect caused by skew of the disk. Since this method may be easily understood by those skilled in the art, further description thereabout is omitted.

## Claims

1. An optical storage apparatus wherein information is stored on the surface of a rotatable optical disk (1), and said information is read out and/or written in by scanning a track formed on said disk (1) with a first optical beam (60) which is controllably centered on said track by an optical track servo means (3; 22) driven by a track error signal generated in an optical track servo system, said optical track servo system comprising:

   a first photosensor (5; 26) comprising a plurality of sub-photosensors (A, B; A, B, C, D) for converting a part of said first optical beam (60 incident thereon into photoelectric currents for outputting a track error signal;

   an objective lens (2), being mounted movably in a plane substantially parallel with said optical disk (1), facing to said optical disk (1) for focusing said first optical beam (60) onto said optical disk (1), having a focal point facing the disk (1), and having a back focal point at the opposite side to said optical disk (1) with respect to said objective lens (2), the first optical beam (60) passing through said objective lens (2) also passing through said back focal point;

   a lens actuating means (3) having a lens electromagnetic coil (32) for driving said objective lens (2) in said plane;

   a tilting mirror (21) for deflecting said first optical beam (60) for centering said first optical beam (60) on said track of said optical disk (1);

   a mirror actuating means (22) having a mirror electromagnetic coil (34) for driving said tilting mirror (21),

   characterized by

   an electrical control means for controllably driving said lens actuating means (3) and said mirror actuating means (22) so that during track servo operation, said first optical beam (60) being directed in co-operation by said tilting mirror (21) and said objective lens (2) always passes through said back focal point (P).

2. An optical storage apparatus wherein information is stored on the surface of a rotatable optical disk (1), and said information is read out and/or written in by scanning a track formed on said disk (1) with a first optical beam (60) which is controllably centered on said track by an optical track servo means (3; 22) driven by a track error signal generated in an optical track servo system, said optical track servo system comprising:

   a first photosensor (5; 26) comprising a plurality of sub-photosensors (A, B; A, B, C, D) for converting a part of said first optical beam (60 incident thereon into photoelectric currents for outputting a track error signal;

   an objective lens (2), being mounted movably in a plane substantially parallel with said optical disk (1), facing to said optical disk (1) for focusing said first optical beam (60) onto said optical disk (1), having a focal point facing the disk (1), and having a back focal point at the opposite side to said optical disk (1) with respect to said objective lens (2), the first optical beam (60) passing through said objective lens (2) also passing through said back focal point;

a lens actuating means (3) having a lens electromagnetic coil (32) for driving said objective lens (2) in said plane;

a tilting mirror (21) for deflecting said first optical beam (60) for centering said first optical beam (60) on said track of said optical disk (1);

a mirror actuating means (22) having a mirror electromagnetic coil (34) for driving said tilting mirror (21);

characterized by

a skew detecting means (100) for detecting a skew of said optical disk (1) and outputting a skew signal ($P_3$) of said optical disk (1), said skew detecting means comprising:

an optical source (101) for emitting a second optical beam (105) which is directed to strike the surface of said optical disk (1);

a photosensor comprising a plurality of sub-photosensors (102, 103) on which said second optical beam (105) reflected by said optical disk (1) falls, and thus generating photocurrents; and

a comparing means (104) for comparing said photocurrents generated in said sub-photosensors (102, 103) and outputting the differential currents as said skew signal ($P_3$) of said optical disk (1) and further by an electrical control means for controllably driving said lens actuating means (3) and said mirror actuating means (22) so that during track servo operation, said first optical beam (60) being directed in co-operation by said tilting mirror (21) and said objective lens (2) and said skew signal ($P_3$) always passes through a virtual back focal point (P') which is defined, in case of skew of the disk (1'), being the intersection between said lens (2) back focal plan (71) and the perpendicular of the surface of the skewed disk (1') through the centre (Q) of the lens (2).

3. An optical storage apparatus by claim 1 or 2,
   characterized in that
   said electrical control means controls said objective lens (2) by said lens actuating means (3) to transfer in tracking direction (T) by the distance $\beta$, and said tilting mirror (21) by said mirror actuating means (22) to rotate by an angle $\theta$ in co-operation with aforesaid transfer of said objective lens (2) such that the relation between the transfer distance $\beta$ of said objective lens (2) and said angle $\theta$ of said tilting mirror (21) satisfies the following equation:

$$\beta = \ell \tan \theta,$$

   whereby $\ell$ denotes the distance between the center (72) of said rotation of the mirror (21) and back focal point ($P_o$) of said lens (2) and the measuring origin of the transfer distance $\beta$ and rotating angle $\theta$ is the neutral position wherein said optical beam (60) is deflected by said tilting mirror (21) by 90 degree to proceed to said optical disk (1).

4. An optical storage apparatus according to claim 1, 2 or 3,
   characterized in that
   an optical system for detecting the angle position of said tilting mirror (21) comprising:
   an optical source (27) for emitting a third optical beam (29);
   a reflecting surface formed on the surface of said tilting mirror (21);
   a photosensor (28) comprising a plurality of sub-photosensors on which said third optical beam (29) reflected by said reflecting surface falls, and thus generating photocurrents; and
   a comparing means for comparing said photocurrents generated in said sub-photosensors and outputting the differential currents as said angle position signal of said tilting mirror (21).

**Patentansprüche**

1. Optische Speicher-Vorrichtung, bei der Information auf der Oberfläche einer drehbaren optischen Platte (1) gespeichert wird und die Information durch Abtasten oder Überstreichen einer Spur, die auf der Platte (1) ausgebildet ist, mit einem ersten optischen Strahl (60) ausgelesen und/oder eingeschrieben wird, der durch ein optisches Spurfolgemittel (3; 22) regelbar auf die Spur zentriert wird, das durch ein Spurfolgefehlersignal getrieben wird, welches in einem optischen Spurfolgesystem erzeugt wird, wobei das optische Spurfolgesystem umfaßt:

einen ersten Photosensor (5; 26), der aus einer Vielzahl von Teil-Photosensoren (A, B; A, B, C, D) besteht, zum Wandeln eines Teils des ersten optischen Strahls (60), der auf diesen trifft, in photoelektrische Ströme zum Ausgeben eines Spurfolgefehlersignals,

eine Objektiv-Linse (2), die in einer Ebene, welche im wesentlichen parallel zu der optischen Platte (1) liegt, bewegbar montiert ist und der optischen Platte (1) zum Fokussieren des ersten optischen Strahls (60) auf die optische Platte (1) gegenüberliegt, einen Brennpunkt hat, der der Platte (1) gegenüberliegt, und einen hinteren Brennpunkt auf der der optischen Platte (1) in bezug auf die Objektiv-Linse (2) abgewandten Seite hat, wobei der erste optische Strahl (60), der die Objektiv-Linse (2) durchläuft, auch den hinteren Brennpunkt durchläuft,

ein Linsen-Betätigungsmittel (3), das eine Linsen-Elektromagnetspule (32) zum Treiben der Objektiv-Linse (2) in der genannten Ebene hat,

einen Neigungs-Spiegel (21) zum Umlenken des ersten optischen Strahls (60) zum Zentrieren des ersten optischen Strahls (60) auf die Spur der optischen Platte (1),

ein Spiegel-Betätigungsmittel (22), das eine Spiegel-Elektromagnetspule (34) zum Treiben des Neigungs-Spiegels (21) hat,

**gekennzeichnet durch**

ein elektrisches Regelmittel zum regelbaren Treiben des Linsen-Betätigungsmittels (3) und des Spiegel-Betätigungsmittels (22), so daß während eines Spurfolgevorgangs der erste optische Strahl (60), der durch Zusammenwirken des Neigungs-Spiegel (21) und der Objektiv-Linse (2) geleitet wird, stets durch den hinteren Brennpunkt (P) verläuft.

2. Optische Speicher-Vorrichtung, bei der Information auf der Oberfläche einer drehbaren optischen Platte (1) gespeichert wird und die Information durch Abtasten oder Überstreichen einer Spur, die auf der Platte (1) ausgebildet ist, mit einem ersten optischen Strahl (60) ausgelesen und/oder eingeschrieben wird, wobei der Strahl durch ein optisches Spurfolgemittel (3; 22) regelbar auf die Spur zentriert wird, das durch ein Spurfolgefehlersignal getrieben wird, welches in einem optischen Spurfolgesystem erzeugt wird, wobei das optische Spurfolgesystem umfaßt:

einen ersten Photosensor (5; 26), der aus einer Vielzahl von Teil-Photosensoren (A, B; A, B, C, D) besteht, zum Wandeln eines Teils des ersten optischen Strahls (60), der auf diesen trifft, in photoelektrische Ströme zum Ausgeben eines Spurfolgefehlersignals,

eine Objektiv-Linse (2), die in einer Ebene, welche im wesentlichen parallel zu der optischen Platte (1) liegt, bewegbar montiert ist und der optischen Platte (1) zum Fokussieren des ersten optischen Strahls (60) auf die optische Platte (1) gegenüberliegt, einen Brennpunkt hat, der der Platte (1) gegenüberliegt, und einen hinteren Brennpunkt auf der der optischen Platte (1) in bezug auf die Objektivlinse (2) abgewandten Seite hat, wobei der erste optische Strahl (60), der die Objektiv-Linse (2) durchläuft, auch den hinteren Brennpunkt durchläuft,

ein Linsen-Betätigungsmittel (3), das eine Linsen-Elektromagnetspule (32) zum Treiben der Objektiv-Linse (2) in der genannten Ebene hat,

einen Neigungs-Spiegel (21) zum Umlenken des ersten optischen Strahls (60) zum Zentrieren des ersten optischen Strahls (60) auf die Spur der optischen Platte (1),

ein Spiegel-Betätigungsmittel (22), das eine Spiegel-Elektromagnetspule (34) zum Treiben des Neigungs-Spiegels (21) hat,

**gekennzeichnet durch**

ein Schräglagen-Erfassungsmittel (100) zum Erfassen einer Schräglage der optischen Platte (1) und zum Ausgeben eines Schräglagen-Signals ($P_3$) der optischen Platte (1), wobei das Schräglagen-Erfassungsmittel umfaßt:

eine optische Quelle (101) zum Aussenden eines zweiten optischen Strahls (105), der so gerichtet ist, daß er auf die Oberfläche der optischen Platte (1) trifft,

einen Photosensor, der aus einer Vielzahl von Teil-Photosensoren (102, 103) besteht, auf die der zweite optische Strahl (105), der durch die optische Platte (1) reflektiert ist, fällt und die dementsprechend Photoströme erzeugen, und ein Vergleichsmittel (104) zum Vergleichen der Photoströme, die in den Teil-Photosensoren (102, 103) erzeugt sind, und zum Ausgeben der Differenzströme als das Schräglagen-Signal ($P_3$) der optischen Platte (1) und ferner durch ein elektrisches Regelmittel zum regelbaren Treiben des Linsen-Betätigungsmittels (3) und des Spiegel-Betätigungsmittels (22), so daß während des Spurfolgevorgangs der erste optische Strahl (60), der durch Zusammenwirken des Neigungs-Spiegels (21) und der Objektiv-Linse (2) und das Schräglagen-Signals ($P_3$) geleitet wird, stets durch einen virtuellen hinteren Brennpunkt (P') verläuft, der im Falle eine Schräglage der Platte (1') durch den Ort der Durchschneidung zwischen der Ebene des hinteren Brennpunkts (61) der Linse (2)

EP 0 189 932 B1

und der Senkrechten zu der Oberfläche der schrägliegenden Platte (1'), die durch das Zentrum (Q) der Linse (2) verläuft, definiert ist.

**3.** Optische Speichervorrichtung nach Anspruch 1 oder 2,
**dadurch gekennzeichnet,** daß
das elektrische Regelmittel die Objektiv-Linse (2) mittels des Linsen-Betätigungsmittels (3) steuert, um sie in Spurfolgerichtung (T) um die Distanz $\beta$ zu versetzen, und den Neigungs-Spiegel (21) durch das Spiegel-Betätigungsmittel (22) in Zusammenwirken mit dem Versetzen der Objektiv-Linse (2) steuert, um ihn um einen Winkel $\theta$ zu drehen, so daß die Beziehung zwischen der Versetzungs-Distanz $\beta$ der Objektivlinse (2) und dem Winkel des Neigungs-Spiegels (21) die Gleichung

$$\beta = \ell \tan \theta$$

erfüllt, wobei $\ell$ die Distanz zwischen dem Zentrum (72) der Drehung des Spiegels (21) und dem hinteren Brennpunkt ($P_0$) der Linse (2) bezeichnet und der Meßanfangspunkt der Versetzungs-Distanz $\beta$ und des Drehwinkels die neutrale Position ist, in welcher der optische Strahl (60) durch den Neigungs-Spiegel (21) um 90° umgelenkt wird, um zu der optischen Platte (1) zu gelangen.

**4.** Optische Speichervorrichtung nach Anspruch 1, 2 oder 3,
**dadurch gekennzeichnet,** daß
ein optisches System zum Erfassen der Winkelposition des Neigungs-Spiegels (21) umfaßt:
eine optische Quelle (27) zum Aussenden eines dritten optischen Strahls (29),
eine reflektierende Oberfläche, die auf der Oberfläche des Neigungs-Spiegels (21) ausgebildet ist,
einen Photosensor (28), der aus einer Vielzahl von Teil-Photosensoren besteht, auf die der dritte optische Strahl (29), der durch die reflektierende Oberfläche reflektiert wird, fällt und die dementsprechend Photoströme erzeugen, und ein Vergleichsmittel zum Vergleichen der Photoströme, die in den Teil-Photosensoren erzeugt sind, und zum Ausgeben der Differenzströme als das Winkelpositions-Signal des Neigungs-Spiegels (21).

**Revendications**

**1.** Appareil de stockage optique dans lequel l'information est stockée sur la surface d'un disque optique tournant (1) et dans lequel ladite information est lue et/ ou écrite par balayage d'une piste formée sur ledit disque (1) à l'aide d'un premier faisceau optique (60) qui est centré de manière contrôlable sur ladite piste par des moyens (3, 22) d'asservissement de suivi optique pilotés par un signal d'erreur de suivi généré par un système d'asservissement de suivi optique, ledit système d'asservissement de suivi optique comprenant :
un premier photocapteur (5, 26) comprenant une pluralité de sous- photodétecteurs (A, B ; A, B, C, D) pour convertir une partie du dit premier faisceau optique (60) incident en un courant photo-électrique de façon à produire en sortie un signal d'erreur de suivi ;
une lentille (2), montée mobile dans un plan pratiquement parallèle au dit disque optique (1), pour focaliser ledit premier faisceau optique (60) sur ledit disque optique (1), comportant un point focal vis à vis du disque (1), et ayant un point focal arrière sur le côté opposé dudit disque optique (1) relativement à ladite lentille (2), le premier faisceau optique (60) passant par ladite lentille (2) et passant aussi par ledit point focal arrière ;
des moyens (3) d'actionnement de lentille, comportant une bobine électromagnétique de lentille (32) pour déplacer ladite lentille (2) dans ledit plan ;
un miroir pivotant (21) pour dévier ledit premier faisceau optique (60) pour centrer ledit premier faisceau optique (60) sur ladite piste du dit disque optique (1) ;
des moyens d'actionnement de miroir (22) comportant une bobine électromagnétique de miroir (34) pour entraîner ledit miroir pivotant (21),
caractérisé par
des moyens de commande électrique pour piloter de façon contrôlée lesdits moyens d'actionnement de lentille (3) et lesdits moyens d'actionnement de miroir (22) de telle sorte que, pendant le fonctionnement d'asservissement de suivi, ledit premier faisceau optique (60), dirigé en coopération par ledit miroir pivotant (21) et ladite lentille (2), passe toujours par ledit point focal arrière (P).

**2.** Appareil de stockage optique dans lequel de l'information est stockée sur la surface d'un disque optique tournant (1) et dans lequel ladite information est lue et/ ou écrite par balayage d'une piste formée sur ledit disque (1) à l'aide d'un premier faisceau optique (60) qui est centré de manière contrôlable sur ladite piste à l'aide de moyens (3 ; 22) d'asservissement de suivi optique, pilotés par un signal d'erreur de suivi généré par un système d'asservissement de suivi optique, ledit système d'asservissement de suivi optique comprenant :

un premier photocapteur (5, 26) comprenant une pluralité de sous- photodétecteurs (A, B ; A, B, C, D) pour convertir une partie du dit premier faisceau optique (60) qui y est incident en courant photo-électrique pour produire en sortie un signal d'erreur de suivi ;

Un objectif (2), monté de manière mobile dans un plan pratiquement parallèle au dit disque optique (1) vis à vis du dit disque optique (1) pour focaliser ledit premier faisceau optique (60) sur ledit disque optique (1), présentant un point focal vis à vis du disque (1) et présentant un point focal arrière sur le côté opposé du dit disque optique (1) relativement à ladite lentille (2), le premier faisceau optique (60), passant par ladite lentille (2), passant aussi par ledit point focal arrière ;

des moyens d'actionnement de lentille (3) comportant une bobine électromagnétique de lentille (32) pour piloter ladite lentille (2) dans ledit plan ;

un miroir pivotant (21) pour dévier ledit premier faisceau optique (60) pour centrer ledit premier faisceau optique (60) sur ladite piste du dit disque optique (1) ;

des moyens d'actionnement de miroir (22) comportant une bobine électromagnétique de miroir (34) pour piloter ledit miroir pivotant (21) ;

caractérisé par

des moyens de détection de biais (100) pour détecter le biais sur ledit disque optique (1) et produire en sortie un signal de biais ($P_3$) concernant ledit disque optique (1), lesdits moyens de détection de biais comprenant :

une source optique (101) pour émettre un second chemin optique (105) qui est dirigé de façon à frapper la surface du dit disque optique (1) ;

un photocapteur, comprenant une pluralité de sous-phtodétecteurs (102, 103), sur lequel tombe le second faisceau optique (105) réfléchi par ledit disque optique (1), et générant ainsi des photocourants ;

des moyens de comparaison (104) pour comparer lesdits photocourants générés sur lesdits sous-photodétecteurs (102, 103) et produire en sortie des courants différentiels servant dedit signal de biais (P3) du dit disque optique (1), et comprenant de plus des moyens de commande électrique pour piloter de manière commandée lesdits moyens d'actionnement de lentille (3) et lesdits moyens d'actionnement de miroir (22) de telle sorte que, pendant l'opération d'asservissement de suivi, ledit premier faisceau optique (60), dirigé en coopération par ledit miroir pivotant (21) et par ladite lentille objective (2) et par ledit signal de biais (P3), passe toujours par un point focal arrière virtuel (P') qui est défini, dans le cas du biais du disque (1') comme étant l'intersection entre ledit plan focal arrière (71) de lentille (2) et la perpendiculaire menée de la surface du disque biaisé (1') au centre Q de la lentille (2).

3. Appareil de stockage optique selon la revendication 1 ou 2, caractérisé en ce que lesdits moyens de commande électrique contrôlent ladite lentille (2) à l'aide des dits moyens d'actionnement de lentille (3) pour la transférer dans une direction de suivi T de la distance $\beta$, et contrôlent ledit miroir pivotant (21) à l'aide des dits moyens d'actionnement de miroir (22) pour le faire tourner d'un angle $\theta$ en coopération avec ledit transfert précité de ladite lentille (2), de telle sorte que la relation entre la distance de transfert $\beta$ de ladite lentille (2) et ledit angle $\theta$ du dit miroir pivotant (21) satisfont l'équation suivante :

$$\beta = 1 \tan \theta$$

de telle sorte que 1 indique la distance entre le centre (72) de ladite rotation du miroir (21) et le point focal arrière P0 de ladite lentille (2) et l'origine de mesure de la distance de transfert $\beta$ et l'angle de rotation $\theta$ concernent la position neutre dans laquelle ledit faisceau optique (60) est dévié par ledit miroir pivotant (21) de 90° pour suivre ledit disque optique.

4. Appareil de stockage optique selon la revendication 1, 2 ou 3, caractérisé en ce que un système optique de détection de la position angulaire du dit miroir pivotant (21) comporte : une source optique (27) pour émettre un troisième faisceau optique (29) ; une surface réfléchissante formée sur la surface du dit miroir pivotant (21) ;

un photocapteur (28) comprenant une pluralité de sous-photodétecteurs sur lequel ledit troisième faisceau optique (29) réfléchi par ladite surface réfléchissante, tombe et produisant ainsi des photo-courants ; et

des moyens de comparaison pour comparer lesdits photo-courants générés sur lesdits photo-détecteurs et produire en sortie un courant différentiel comme étant le signal de position angulaire dudit miroir pivotant (21).

## FIG. 1

PRIOR ART

## FIG. 2

PRIOR ART

EP 0 189 932 B1

# FIG. 3

PRIOR ART

# FIG. 4

15

## FIG. 5

## FIG. 6

## FIG. 7

## FIG. 8

# FIG. 9

(A+D)-(B+C) $\circ$ $T_1$ —— [ focus drive circuit ] —31— ))) 32

(A+B)-(C+D) $\circ$ $T_2$ —— [ mirror drive circuit ] —33— ))) 34

$P_1$ $\circ$ —— [ diff. amp. ] —41— [ lens drive circuit ] —42— ))) 39

$P_2$ $\circ$ ——

# FIG. 10

track error signal

$T_3$ $\circ$ —— $-$ / $+$ $\overline{A}$ —— [ $G_1$ ] —151— $\overline{B}$ —— $+$ / $+$ $\overline{C}$ —— $\circ$ $T_4$

target value

$-$ / $+$ $\overline{D}$ —— [ $G_2$ ] —152—

18

# FIG. 11

# FIG. 12

# FIG. 13

S

E

S'

k

track servo ON ← | track servo OFF | → track servo ON

coarse accessing time

# FIG. 14

peak hold circuit 51

track error signal

peak hold circuit 52

53

A/D 54

# FIG. 15

$(A+D)-(B+C)$ ∘ T_1 — focus drive ciruit **31** — **32**

$(A+B)-(C+D)$ ∘ T_2 — mirror drive circuit **33** — **34**

average value detector **55** — AV — A/D **54**

CPU **58** ⇄ k storage device **57** ⇄ k

D/A **56**

P_3 ∘
P_1 ∘
P_2 ∘
**41**
lens drive circuit **42** — **39**